# EUROPEAN PATENT APPLICATION

(11) **EP 3 241 649 A1**
(43) Date of publication of application: **08.11.2017**
(21) Application number: 15874455.7
(22) Date of filing: 23.11.2015
(51) Int. Cl.: B23Q 11/08, B23Q 11/00

(54) **DUST-PROOF DEVICE FOR MACHINE TOOL WORKTABLE**

(30) Priority: 02.01.2015 CN 201510004943
(71) Applicant: Greatoo Intelligent Equipment Inc., Jieyang, Guangdong 515500 (CN); Greatoo(Guangzhou) Intelligent Technology Research, Guangzhou, Guangdong 510530 (CN)
(72) Inventor: MENG, Chao, Jieyang Guangdong 515500 (CN); WU, Pinfeng, Jieyang Guangdong 515500 (CN); LIU, Qiangjun, Jieyang Guangdong 515500 (CN); ZHENG, Yisheng, Jieyang Guangdong 515500 (CN)
(74) Representative: Cabinet Chaillot
(86) International application number: PCT/CN2015/000810
(87) International publication number: WO 2016/106762

(57) **Abstract**

A dust-proof device for a machine tool worktable. The dust-proof device comprises a worktable (01), a worktable base (06), a stainless steel dust cover (03), organ-type dust covers (04) and L-shaped dust-proof plates (11). The worktable base (06) is installed on a machine tool bridge (07). The upper portion of the worktable base (06) is provided with a U-shaped through groove (15). Two ends of the stainless steel dust cover (03) are sealed by the L-shaped dust-proof plates (11). The upper portion of each L-shaped dust-proof plate (11) is fixed on the lower side of the stainless steel dust cover (03), and the lower portion of the L-shaped dust-proof plate (11) is fixed on the machine tool bridge. Each organ-type dust cover (04) is disposed under the stainless steel dust cover (04) and has one end connected to the worktable base (06) and the other end connected to the L-shaped dust-proof plate (11). The worktable (01) covers the stainless steel dust cover (03) and is connected to the worktable base (06) by means of bolts. The device has good sealing effect and low costs, and is convenient to maintain.

## Description

### Field of the Invention

The present invention relates to a dust-proof device for a machine tool worktable.

### Background of the Invention

Numerical control machine tools are novel automatic machine tools developed in 1950s, which well solve the machining problems of complexly shape, precision and small-batch parts, and have the advantages of good adaptability, and high machining precision and production efficiency. Integration of advanced technologies in such aspects as electronic computers, automatic control, servo drive, precision measurement and novel mechanical structures in numerical control machine tools leads to development of the numerical control machine tools with rapid changes, and stronger and stronger functions of the numerical control machine tools. The development trend of the numerical control machine tools reflects in developments in aspects such as numerical control functions, numerical control servo systems, programming methods, detecting and monitoring functions of the numerical control machine tools, automatic adjustment and control technologies, and the like.

The traditional dust-proof devices for the machine tool worktable are designed into a multi-layer folded stainless steel plate telescopic structure, which has the following defects: folded plates occupy space at both ends of the worktable; the worktable is short in travel; moreover, multiple folded layers are complex in structure, poor in leakproofness, difficult in scrap iron removal, and prone to water leakage.

### Summary of the Invention

The present invention aims at overcoming the defects of the existing telescopic dust-proof devices and providing an improved dust-proof device for a machine tool worktable, following the following design idea: the integrated stainless steel dust cover is adopted instead, which may not occupy the space of the worktable, thereby making the travel of the worktable longer; meanwhile, the dust-proof structure is optimized with added dust-proof brushes, thereby improving the performance in dust prevention, scrap prevention and removal, and water drainage.

The dust-proof device for the machine tool worktable provided by the present invention comprises a stainless steel dust cover arranged on a worktable and a worktable base, organ-type dust covers and L-shaped dust-proof plates. The worktable base is installed on a machine tool bridge by means of a pair of linear guide rails and a pair of ball screws. A U-shaped through groove is milled out in an upper portion of the worktable base. The stainless steel dust cover is shaped into an inverted U shape from a metal plate and penetrates through the U-shaped through groove. Two ends of the stainless steel dust cover are sealed by the L-shaped dust-proof plates. An upper portion of each L-shaped dust-proof plate is fixed on a lower side of the stainless steel dust cover by means of a bolt, and a lower portion of the L-shaped dust-proof plate is fixed on an end face of the machine tool bridge by means of a bolt. Each organ-type dust cover is disposed under the stainless steel dust cover and has one end connected to the worktable base and the other end connected to the corresponding L-shaped dust-proof plate, and two organ-type dust covers are distributed on two sides of the worktable base. The worktable covers the stainless steel dust cover and is connected to the worktable base by means of bolts.

In the present invention, U-shaped dust-proof grooves may be formed between two sides of the machine tool bridge and the organ-type dust covers to seal slots in the lower ends of the organ-type dust covers, thereby improving the leakproofness of the machine tool.

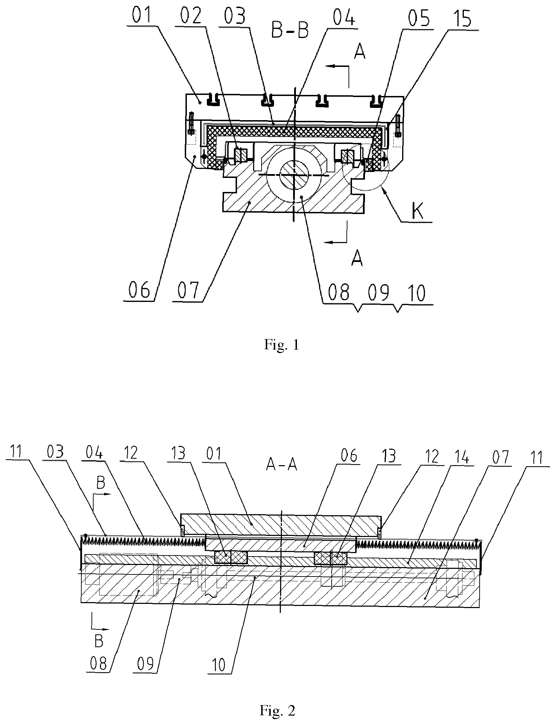

In the present invention, the dust-proof brushes may be arranged on the left and right end faces (relative to Fig. 2) of the worktable, respectively.

The present invention has the following positive advantages:
1) the integrated stainless steel dust cover is adopted, such that space is saved and the travel of the worktable is increased;
2) the worktable base is designed with the U-shaped groove through which the stainless steel dust cover penetrates, and the two ends of the dust cover are sealed by the L-shaped dust-proof plates; such a structure is good in leakproofness, and more excellent than the traditional structure in the performances of dust prevention, scrap prevention and water proofing;
3) the dust-proof brushes are installed at the two ends of the worktable, and capable of effectively removing iron scrap and cooling water when the worktable moves;
4) the organ-type dust covers are additionally mounted below the stainless steel dust cover to keep such precision parts as the pair of lead balls and the pair of linear guide rails inside clean, ensure the precision of the machine tool and prolong the service life of the parts.

The present invention creatively utilizes the integrated stainless steel dust cover and is additionally provided with the dust-proof brushes, and thus has the advantages such as good sealing effect, water proofing, iron scrap prevention, oil resistance, convenience in clearing, low costs, good protective performance, convenience in installation and maintenance, improvement of the working efficiency and the like.

### Brief Description of the Drawings

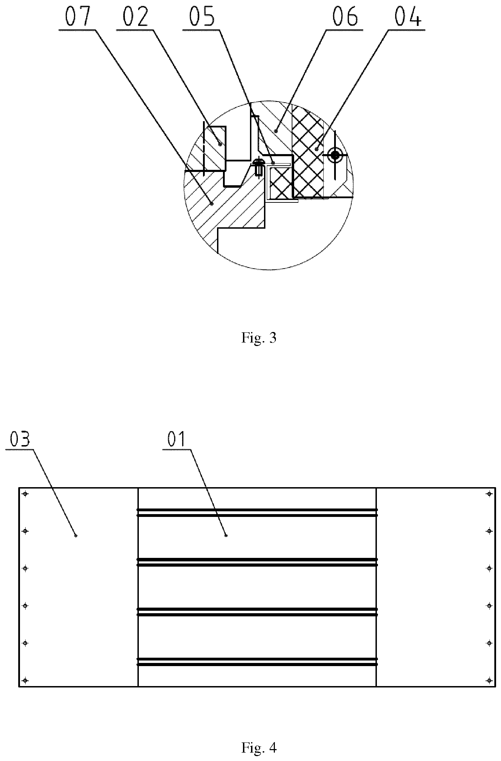

Fig. 1 to Fig. 4 are structural schematic diagrams of an embodiment of the present invention, in which Fig. 1 is a B-B sectional view of Fig. 2; Fig. 2 is an A-A sectional view of Fig. 1; Fig. 3 is an enlarged view of K portion of Fig. 1; Fig. 4 is a top view relative to Fig. 2. In all the drawings, 01 Worktable; 02 Pair of linear guide rails; 03 Stainless steel dust cover; 04 Organ-type dust cover; 05 U-shaped dust-proof groove; 06 Worktable base; 07 Machine tool bridge; 08 Servomotor; 09 Coupling; 10 Pair of lead screws; 11 L-shaped dust-proof plate; 12 Dust-proof brush; 13 Ball slider; 14 Linear guide rail; 15 U-shaped through groove.

### Detailed Description of the Embodiments

Referring to Fig. 1 to Fig. 4, a dust-proof device for a machine tool worktable comprises a stainless steel dust cover 03 arranged on a worktable 01 and a worktable base 06, organ-type dust covers 04 and L-shaped dust-proof plates 11. The worktable base 06 is installed on a machine tool bridge 07 by means of a pair of linear guide rails 02 and a pair of ball screws 10. A U-shaped through groove 15 is milled out in an upper portion of the worktable base 06. The stainless steel dust cover 03 is shaped into an inverted U shape from a metal plate and penetrates through the U-shaped through groove 15. Two ends of the stainless steel dust cover 03 are sealed by the L-shaped dust-proof plates 11. An upper portion of each L-shaped dust-proof plate 11 is fixed on a lower side of the stainless steel dust cover 03 by means of a bolt, and a lower portion of the L-shaped dust-proof plate 11 is fixed on an end face of the machine tool bridge by means of a bolt. Each organ-type dust cover 04 is disposed under the stainless steel dust cover 03 and has one end connected to the worktable base 06 and the other end connected to the corresponding L-shaped dust-proof plate 11, and two organ-type dust covers 04 are distributed on two sides of the worktable base. The worktable 01 covers the stainless steel dust cover 03 and is connected to the worktable base 06 by means of bolts. U-shaped dust-proof grooves 05 are formed between two sides of the machine tool bridge 07 and the organ-type dust covers 04 to seal slots in the lower ends of the organ-type dust covers, thereby improving the leakproofness of the machine tool. The dust-proof brushes 12 are arranged on the left and right end faces (relative to Fig. 2) of the worktable 01, respectively.

The dust-proof device for the machine tool worktable provided by the present invention works by following the following principle: the servomotor 08 drives, by means of the coupling 09, the pair of lead screws 10 to rotate to pull the worktable base 06 and the worktable 01 to move leftwards and rightwards as guided by the pair of linear guide rails 02; the dust-proof brushes 12 at the two ends of the worktable 01 then remove iron scrap, waste residue, wastewater and the like produced in workpiece machining, which may be discharged into a waste tank below the machine tool. By means of multiple protective parts such as the stainless steel dust cover 03, the organ-type dust covers 04, the U-shaped dust-proof grooves 05, the L-shaped dust-proof plates 11, the dust-proof brushes 12, the leakproofness of the machine tool is improved, and steady and efficient operation of the machine tool can be guaranteed.

## Claims

1. A dust-proof device for a machine tool worktable, comprising a stainless steel dust cover (03) arranged on a worktable (01) and a worktable base (06), organ-type dust covers (04) and L-shaped dust-proof plates (11), wherein the worktable base (06) is installed on a machine tool bridge (07) by means of a pair of linear guide rails (02) and a pair of ball screws (10); a U-shaped through groove (15) is milled out in an upper portion of the worktable base (06); the stainless steel dust cover (03) is shaped into an inverted U shape from a metal plate and penetrates through the U-shaped through groove (15); two ends of the stainless steel dust cover (03) are sealed by the L-shaped dust-proof plates (11); an upper portion of each L-shaped dust-proof plate (11) is fixed on a lower side of the stainless steel dust cover (03) by means of a bolt, and a lower portion of the L-shaped dust-proof plate (11) is fixed on an end face of the machine tool bridge by means of a bolt; each organ-type dust cover (04) is disposed under the stainless steel dust cover (03) and has one end connected to the worktable base (06) and the other end connected to the corresponding L-shaped dust-proof plate (11), and two organ-type dust covers (04) are distributed on two sides of the worktable base; the worktable (01) covers the stainless steel dust cover (03) and is connected to the worktable base (06) by means of bolts.

2. The dust-proof device for the machine tool worktable of claim 1, wherein U-shaped dust-proof grooves (05) are formed between two sides of the machine tool bridge (07) and the organ-type dust covers (04).

3. The dust-proof device for the machine tool worktable of claim 1 or 2, wherein dust-proof brushes (12) are arranged on left and right end faces of the worktable (01), respectively.
